# EUROPEAN PATENT SPECIFICATION

(11) **EP 2 773 742 B1**
(45) Date of publication and mention of the grant of the patent: **07.07.2021**
(21) Application number: 12846221.5
(22) Date of filing: 24.10.2012
(51) Int. Cl.: B65D 1/02, B65D 81/24, C12H 1/14, B65D 85/72

(54) **ADDITION OF TRANSITION METAL TO WINES AND WINE TYPE BEVERAGES IN METALLIC BEVERAGE CONTAINERS TO PREVENT UNWANTED AROMAS**
ZUGABE VON ÜBERGANGSMETALLEN ZU WEINEN UND WEINARTIGEN GETRÄNKEN IN METALLISCHEN GETRÄNKEBEHÄLTERN ZUR VERHINDERUNG UNERWÜNSCHTER AROMEN
ADDITION DE MÉTAL DE TRANSITION À DES VINS ET À DES BOISSONS DE TYPE VIN DANS DES RÉCIPIENTS MÉTALLIQUES DE BOISSON POUR EMPÊCHER DES AROMES INDÉSIRABLES

(30) Priority: 31.10.2011 US 201161553732 P
(43) Date of publication of application: 10.09.2014
(73) Proprietor: Ball Corporation, Westminster, CO 80021 (US)
(72) Inventor: BRENDECKE, Scott, Superior, CO 80027 (US)
(74) Representative: Eisenführ Speiser
(86) International application number: PCT/US2012/061512
(87) International publication number: WO 2013/066673

(56) References cited:
- WO-A1-00/73200
- CH-A5- 648 993
- DE-A1- 2 339 975
- DE-A1- 19 721 920
- US-A- 5 744 183
- US-A- 5 972 402
- US-A1- 2001 031 376
- US-A1- 2004 028 778
- US-A1- 2004 137 109
- US-A1- 2005 196 499
- US-A1- 2005 224 423
- MAURIZIO UGLIANO ET AL: "Evolution of 3-Mercaptohexanol, Hydrogen Sulfide, and Methyl Mercaptan during Bottle Storage of Sauvignon blanc Wines. Effect of Glutathione, Copper, Oxygen Exposure, and Closure-Derived Oxygen", JOURNAL OF AGRICULTURAL AND FOOD CHEMISTRY, vol. 59, no. 6, 23 March 2011 (2011-03-23) , pages 2564-2572, XP055195230, ISSN: 0021-8561, DOI: 10.1021/jf1043585
- None

## Description

### CROSS REFERENCE TO RELATED APPLICATIONS

The present application claims the benefits of U.S. Provisional Application Serial No. 61/553,732 filed October 31, 2011 entitled "ADDITION OF TRANSITION METAL TO WINES AND WINE TYPE BEVERAGES IN METALLIC BEVERAGE CONTAINERS TO PREVENT UNWANTED AROMAS".

### FIELD OF INVENTION

This invention relates to a method for removing malodors and/or unwanted-flavors from a wine and/or wine-type beverage using a transition metal, and more particularly to the removal of unwanted or malodorous sulfur and/or sulfur-containing compounds from wine and/or wine-type beverages by adding copper and/or a copper-containing compound during bottling of the wine and/or wine type beverage.

### BACKGROUND OF THE INVENTION

Wine making typically includes pressing fruit (typically, grapes) to obtain a fruit juice, fermenting the fruit juice, maturing the fruit juice to form wine and, after maturation, bottling the wine. Typically, the fermentation and maturation processes are carefully controlled to develop preferred organoleptic characteristics. However, due to the characteristics of the fruit (such as, growing, harvesting and/or storage conditions), maturation process (such as, temperature, oxidation, and such), and/or bottling (such as, oxygen, wine composition, container and closure system) unwanted odors and/or flavors can develop during one or both of the fermentation and maturation processes. The unwanted odors and/or flavors are typically removed by treating the wine with a fining agent. The fining agent is usually separated from the wine prior to bottling the wine. Examples of fining agents include isinglasse, bentonite, galatin, casein, carrageenan, alginate, diatomaceous earth, pectinase, pectolase, polycar, colloidal silica, copper sulfate, albumen, hydrated yeast, activated carbon, and potassium caseinate. The unwanted odor and/or flavor are typically associated with sulfur and/or sulfur-containing compounds. The sulfur and/or sulfur-containing compounds may be present in the fruit juice that wine is prepared from, may develop during fermentation and/or maturation, and/or may develop as the wine and/or wine-type ages during storage. In some instances, the generation of sulfur and/or sulfur-containing compounds can be minimized, or substantially eliminated, by storing and/or aging the wine in a container having a cork, which typically permits the ingress of oxygen. Oxygen can prevent, or at less minimize, the formation of sulfur and/or sulfur-containing compounds.

However, unwanted odors and/or flavors can develop in bottled wine (such as, wines bottled in containers having a non-cork closure system). Unwanted odor and flavor development is particularly problematic in wines bottled in metallic containers, even more particularly to wines bottled in metallic containers having metallic lids and/or closure systems. Since it is more cost effective to manufacture, fill and transport containers made from metallic materials as opposed to traditional glass, there is a significant need in the beverage and container industries to manufacture and utilize metallic containers for wine and other alcoholic beverages, yet reduce the unwanted odor and flavor caused by sulfur and/or other sulfur-containing compounds.

The article "Evolution of 3-Mercaptohexanol, hydrogen Sulfide, and Methyl Mercaptan during Bottle Storage of Sauvignon blanc Wines" (MAURIZIO UGLIANO ET AL, Journal of Agricultural and Food Chemistry, vol. 59, no.6, 2011) describes the effects of wine composition and postbottling oxygen exposure on 3-mercaptohexanol, hydrogen sulfide, and methyl mercaptan.

US 2005/224423 A1 describes a method for inhibiting the growth of microbes in liquid nutrient in a container, the container having an interior surface having a metal-ion sequestering agent and antimicrobial agent for inhibiting growth of microbes in the liquid nutrient.

US 2001/0031376 A1 describes a process of preparing aluminum sheets for the fabrication of blanks used in the impact extrusion of long-necked can bodies.

A significant need exists for a bottling process that reduces unwanted odor and/or flavor formation in wines bottled in metallic containers, particularly for wines bottled in metallic containers having metallic lids and/or closure systems.

### SUMMARY OF THE INVENTION

These and other needs are addressed by the various embodiments and configurations of the present invention. This disclosure relates to a container system for reducing and/or eliminating unwanted odor and flavor in bottled wine and to a method for forming the container system for reducing and/or eliminating unwanted odor and/or flavor in bottled wine. More specifically, this disclosure relates to a metallic container system and to a system for reducing and/or eliminating unwanted odor and/or flavor in bottled wine and wine-like beverages.

One aspect of the present invention is a method for reducing unwanted odor and/or flavor in a wine by contacting a transition metal-containing compound with the wine to form a treated wine. The treated wine contains the transition metal-containing compound. The method includes filling a metal container with one of the wine, the treated wine or a combination of both and sealing the container containing the treated wine with a metallic closure system. The contacting of the wine with the transition metal-containing compound generally occurs after one or both of the fermentation and maturation processes. The wine may further include one or both of a non-fermented fruit juice and soda water.

Another aspect of the present invention is a method for reducing unwanted odor and/or flavor in a bottled wine by contacting the wine with a copper-containing compound to form a treated wine and sealing the treated wine in a metallic container having a metallic closure system to form a bottled wine. The contacting of the wine with the transition metal-containing compound is conducted after one or both of fermentation and maturation of the wine. Preferably, the transition metal-containing compound comprises an insoluble transition metal-containing compound. The treated wine is preferably a copper-containing wine.

Yet another aspect of the present invention is a metallic container comprising aluminum. The metallic container has a predetermined volume. The predetermined volume being defined by a container wall interconnected to a container bottom and a metallic closure system. The metallic closure system is preferably a lid or screw cap. The container bottom and metallic closure system are in an opposing relationship. In some embodiments, the method further includes substantially filling the predetermined volume with the treated wine. In some embodiments, the treated wine substantially fills the predetermined volume.

In another embodiment, the metallic container and/or metallic closure system comprise a transition metal. In some configurations, the metallic container and/or metallic closure system comprise aluminum. Preferably, the transition metal is copper.

In such embodiments, contacting the wine with the transition metal-containing metallic container and/or closure system forms the treated wine. Furthermore, in some embodiments, contacting the wine with the transition metal-containing metallic container and/or closure system releases at least some transition metal in the wine to form the treated wine. Moreover, in some embodiments, contacting the wine with the transition metal-containing metallic container and/or closure system removes one or both of unwanted odor and flavor from the wine to form the treated wine.

Preferably, the container is an aluminum container having a predetermined volume for receiving the wine. A container bottom, wall and end closure define the predetermined volume. The container wall and bottom may be formed simultaneously by a draw/redraw process or may be formed from two distinct components. Furthermore, the container wall defines an aperture adapted to receive the metallic closure system. According to the invention, the metallic container and the metallic closure system are substantially impervious to one or both of oxygen permeation and transmission.

The transition metal-containing compound contains a transition metal selected from the group of metals consisting of scandium, titanium, manganese, iron, cobalt, nickel, copper, zinc, yttrium, zirconium, niobium, molybdenum, ruthenium, rhodium, palladium, silver, hafnium, tantalum, tungsten, rhenium, iridium, platinum, and gold. Preferably, the transition metal-containing compound comprises copper.

While not wanting to be bound by theory, the contacting of the transition metal-containing compound with one or both of sulfur and a sulfur-containing compound forms an insoluble compound. The insoluble compound is believed to contain the transition metal and the one or both of the sulfur and sulfur-containing compound.

Typically, the sulfur and/or sulfur-containing compound is preferably are one of sulfide (S²⁻), hydrogen sulfide (HS⁻), dihydrogen sulfide (H₂S), mercaptan (R-SH), 3-mercaptohexanol (CH₃CH₂CH(SH)CH₂CH₂OH), methyl mercaptan, and/or a mixture thereof. Commonly, the insoluble compound contains the transition metal and at least one of sulfide (S²⁻), hydrogen sulfide (HS⁻), dihydrogen sulfide (H₂S), mercaptan (R-SH), 3-mercaptohexanol (CH₃CH₂CH(SH)CH₂CH₂OH), methyl mercaptan (CH₃SH), ethyl mercaptan (CH₃CH₂SH), 2-mercatoethanol (HOCH2CH2SH) or a combination thereof.

Preferably, the transition metal is copper. The copper preferably forms an insoluble compound with the sulfur and/or sulfur-containing compound. Commonly, the insoluble compound contains copper (II) and at least one of sulfide (S²⁻), hydrogen sulfide (HS⁻), dihydrogen sulfide (H2S), mercaptan (R-SH), 3-mercaptohexanol (CH₃CH₂CH(SH)CH₂CH₂OH), methyl mercaptan (CH₃SH), ethyl mercaptan (CH₃CH₂SH), 2-mercatoethanol (HOCH₂CH₂SH) or a combination thereof.

According to the invention, the treated and/or transition metal-containing wine contains no more than about 0.2 ppm copper. In a more preferred embodiment, the treated wine contains copper in the form of copper (II). In an even more preferred embodiment, the treated wine contains copper in the form of copper sulfate.

Another aspect of the present invention is a method for reducing unwanted odor in a wine-type beverage by contacting the wine-type beverage with a copper-containing material to form a treated wine-type beverage. The contacting of the wine-type beverage with the copper-containing material forms a treated wine-type beverage, and sealing the treated wine-type beverage in a container to form a bottled beverage. The container is sealed with an end closure. Preferably, the container comprises one of an aluminum container or glass container. The container has a predetermined volume, the predetermine volume defined by a container wall and a container bottom. The container wall defines a neck on an upper end to receive the end closure.

Some embodiments include filling the predetermined volume substantially with the treated wine-type beverage, and sealing the end closure to neck of the container to form the bottled beverage. Preferably, the container is substantially impervious to one or both of oxygen permeation and transmission. The end closure is at least one of a screw cap, a cork and a pull tab.

Preferably, the copper-containing material forms an insoluble copper-containing compound with sulfur or a sulfur-containing compound. The sulfur and/or sulfur-containing compound comprise one or more of sulfide (S²⁻), hydrogen sulfide (HS⁻), dihydrogen sulfide (H₂S), mercaptan (R-SH), 3-mercaptohexanol (CH₃CH₂CH(SH)CH₂CH₂OH), methyl mercaptan (CH₃SH), ethyl mercaptan (CH₃CH₂SH), 2-mercatoethanol (HOCH₂CH₂SH) or a combination thereof. The copper-containing material is one of added to wine-type beverage or contained within the container.

As used herein, the following terms and meanings are provided:
"Wine" refers to wine and wine-type alcoholic and non-alcoholic beverages, including wine coolers, beers, mixed drinks and other combinations currently sold in grocery, package, or liquor stores.

"Wine-type beverages" refer to beverages containing fermented and/or matured wine and one or both of a non-fermented fruit juice and soda water.

Wine and wine-type beverages will be used interchangeably. That is, wine can refer to a wine-type beverage and wine-type beverage can refer to a wine.

"Bottled wine" refers to wine, after fermentation and/or maturation, stored in a sealed container. The sealed container can include one or more metallic components, such as the container body, end closure, breathable metallic cap and/or metallic bottle adapted to receive a cork closure. A breathable metallic cap refers to a metallic cap that can allow for at least some oxygen transmission in the sealed container. Preferably, the breathable metallic cap has oxygen transmission properties similar to a cork closure system. The breathable metallic cap transmits sufficient oxygen to the bottled wine to substantially mitigate aerobic conditions and formation of sulfur and/or sulfur-containing compounds.

"Transition metal" generally refers to a metal bellowing to groups 4-12 of the periodic table. A transition metal generally has an atomic number selected from the group of atomic numbers of 21-30, 39--48, and 72-80.

These and other advantages will be apparent from the disclosure of the invention(s) contained herein.

As used herein, the term "a" or "an" entity refers to one or more of that entity. As such, the terms "a" (or "an"), "one or more" and "at least one" can be used interchangeably herein. It is also to be noted that the terms "comprising", "including", and "having" can be used interchangeably.

As used herein, "at least one", "one or more", and "and/or" are open-ended expressions that are both conjunctive and disjunctive in operation. For example, each of the expressions "at least one of A, B and C", "at least one of A, B, or C", "one or more of A, B, and C", "one or more of A, B, or C" and "A, B, and/or C" means A alone, B alone, C alone, A and B together, A and C together, B and C together, or A, B and C together.

The preceding is a simplified summary of the invention to provide an understanding of some aspects of the invention. This summary is neither an extensive nor exhaustive overview of the invention and its various embodiments. It is intended neither to identify key or critical elements of the invention nor to delineate the scope of the invention but to present selected concepts of the invention in a simplified form as an introduction to the more detailed description presented below. As will be appreciated, other embodiments of the invention are possible utilizing, alone or in combination, one or more of the features set forth above or described in detail below.

### BRIEF DESCRIPTION OF THE DRAWINGS

The accompanying drawings are incorporated into and form a part of the specification to illustrate several examples of the present invention(s). These drawings, together with the description, explain the principles of the invention(s). The drawings simply illustrate preferred and alternative examples of how the invention(s) can be made and used and are not to be construed as limiting the invention(s) to only the illustrated and described examples.

Further features and advantages will become apparent from the following, more detailed, description of the various embodiments of the invention(s), as illustrated by the drawings referenced below.
Fig. 1 depicts a process according to an embodiment;
Fig. 2A depicts a plan view of a container according to some embodiments;
Fig. 2B depicts a cross-sectional view of the container depicted in Fig. 2A;
Fig. 3A depicts a plan view of a container according some embodiments; and
Fig. 3B depicts a cross-section view of the container depicted in Fig. 3A.

### DETAILED DESCRIPTION OF THE INVENTION

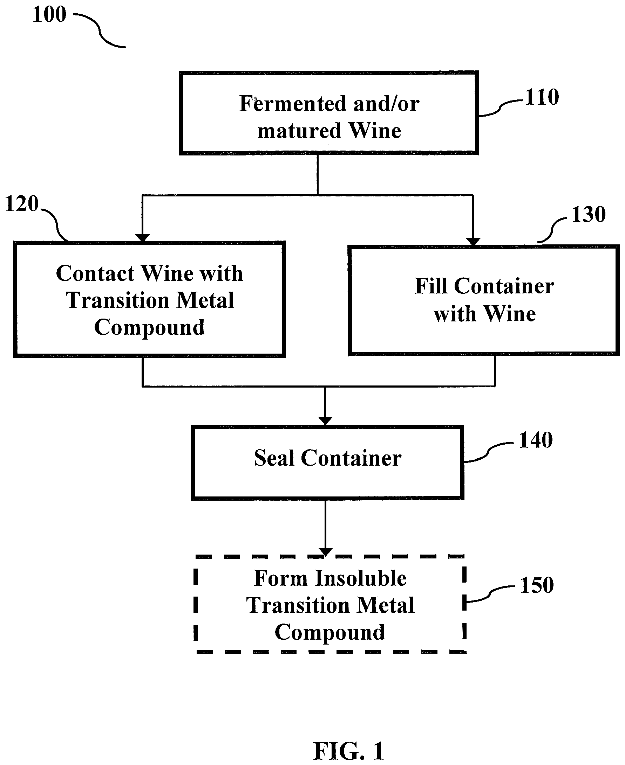

Fig. 1 depicts a process 100 for treating wine according to one aspect of the present invention. In step 110, wine in the form of a fermented and/or matured wine is provided for bottling. The wine may or may not contain unwanted malodorous sulfur-containing compounds. Commonly, the wine is treated with one or both of a fining agent and a sulfur removal agent prior to step 110 to remove the unwanted malodorous sulfur-containing compounds. One or both of the fining and sulfur removal agents typically remove at least most, if not all, of the unwanted malodorous sulfur-containing compounds present in the wine. Furthermore, the fining and/or sulfur removal agents commonly remove the unwanted malodorous sulfur-containing compounds by one or more of absorption, adsorption, complexation, precipitation, and chemical reaction of the fining and/or sulfur removal agents with the unwanted malodorous sulfur-containing compounds. Ordinarily, one or more of the absorbed, adsorbed, complexed, precipitated and/or reacted unwanted malodorous sulfur-containing compounds, the fining agent and sulfur removal agent are removed from the wine prior to step 110.

Preferably, the wine in the form of a fermented and/or matured wine provided in step 110 is substantially free of the one or more of the unwanted malodorous sulfur-containing compounds, fining agent and sulfur removal agent. In some embodiments, the wine provided in step 110 is in the form of a wine-type beverage, such as, but not limited to wine blended with one or both of a non-fermented fruit juice and carbonated water (that is, soda water).

Steps 120 and 130 can be performed in any order. In some embodiments, step 120 is performed before step 130. In other embodiments, step 120 is preformed after step 130. In yet other embodiments, steps 120 and 130 are preformed substantially at about the same time.

In step 120, a transition metal compound is contacted with the wine. Preferably, the transition metal compound is a water-soluble transition metal compound. The transition metal compound comprises a compound containing one or more metals selected from Groups 3-12 of the periodic table. Preferably, the transition metal compound contains at least one metal having an atomic number selected from the group of atomic numbers consisting of 21, 22, 25-30, 39-42, 44-47, 72-75 and 77-79. The transition metal is typically selected from the group of metals consisting of scandium, titanium, manganese, iron, cobalt, nickel, copper, zinc, yttrium, zirconium, niobium, molybdenum, ruthenium, rhodium, palladium, silver, hafnium, tantalum, tungsten, rhenium, iridium, platinum and gold. More preferably, the transition metal compound contains a metal having atomic number 29. In some embodiments, the transition metal compound is a copper-containing compound. According to some embodiments, the transition metal compound has substantially little, if any, transition metal other than copper. In accordance with some embodiments, the transition metal compound consists essentially of a copper-containing compound.

In some embodiments, the transition metal compound is contacted with the wine by adding the transition metal compound to the wine. Preferably, the contacting of the wine with the transition metal compound dissolves at least some of the transition metal to form the treated wine.

In some embodiments, the metallic container comprises an aluminum alloy. The aluminum alloy may or may not include one or more transition metals. In such instances, the treated wine is form by contacting the wine with the metallic container. More specifically, the contacting of the wine with the transition metal contained in one or more of the container wall, container bottom, metallic lid and metallic closure system forms the treated wine. The transition metal content of the aluminum alloy is typically from about 0.01 to about 5 wt%, more typically from about 0.05 to about 4.5 wt%. In some configurations the transition metal content of aluminum alloy is from about 2 to about 4.5 wt%, preferably from about 2 to about 3 wt%. In some configurations, the transition metal content of the aluminum alloy is as low as from about 0.05 to about 1.5 wt%.

In some configurations, the copper content of the aluminum alloy is from about 0.01 to about 0.2 wt% copper. In some configurations, the copper content of the aluminum alloy is from 0.05 to about 0.03 wt% copper.

It some embodiments, the container wall and container bottom may comprise a first metallic alloy. In some embodiments, the metallic lid and/or metallic closure system comprise a second metallic alloy.

In some configurations, the first and second alloys are the same. In some configurations, the first and second alloys differ.

While not wanting to be limited by example, the aluminum alloy typically comprises one of 1000 or 3000 aluminum alloy. Non-limiting examples of 1000 series aluminum alloys are 1050, 1060, 1100 and 1199. The 1000 series aluminum alloys typically contain from about 99 to about 99.99 wt% aluminum. Moreover, the 1000 series aluminum alloys typically contain one or more of Si, Fe, Cu, Mn, Mg, Cr, Zn, V, Ti, Bi, Ga, Pb and Zr. Non-limiting examples of 3000 series aluminum alloys are 3003, 3004, and 3102. The 3000 series aluminum alloys typically contain form about 95 to about 98 wt% aluminum. Moreover, the 3000 series aluminum alloys typically contain one or more of Si, Fe, Cu, Mn, Zn and Ti.

The copper-containing compound may comprise any copper containing compound. Preferably, the copper-containing compound comprises a water-soluble copper compound. More preferably, the copper-containing compound comprises a water-soluble copper (II) compound. Non-limiting examples of water-soluble copper containing compounds comprise copper sulfate, copper nitrate, copper chloride, copper bromide, copper iodide, copper acetate, copper butanoate, copper citrate, copper ethylacetonate, copper formate, copper gluconate, copper iodate, copper 2, 4-pentadioate, copper tartate, copper tetrafluoroburate, copper benzoate and mixtures thereof. According to some embodiments, the copper-containing compound comprises one of copper sulfate, copper benzoate, or a mixture thereof.

Preferably, the copper-containing compound is hydrated copper sulfate. The hydrated copper sulfate may have any degree of hydration. Commonly, the hydrated form of copper sulfate may contain for each mole of copper no more than one mole of water, more commonly no more than two moles of water, even more commonly no more than three moles of water, yet even more commonly no more than four moles of water, still yet even more commonly no more than five moles of water, still yet even more commonly no more than six moles of water, still yet even more commonly no more than seven moles of water, still yet even more commonly no more than eight moles of water, still yet even more commonly no more than nine moles of water, still yet even more commonly no more than ten moles of water, still yet even more commonly no more than eleven moles of water, or still yet even more commonly no more than twelve moles of water.

In some embodiments, the copper sulfate commonly contains for each mole of copper from about 1 to about 12 moles of water, more commonly from about 3 to about 10 moles of water, even more commonly form about 4 to about 6 moles of water, or yet even more commonly about 5 moles of water.

In some embodiments, the copper-containing compound is provided in an anhydrous form. In some configurations, the copper sulfate is provided in an anhydrous form.

The contacting of the copper-containing compound with the wine forms a treated wine. The treated wine may comprise the copper-containing compound in a substantially dissolved, dissociated state in the treated wine. Commonly, the treated wine contains no more than about 0.5 ppm of the copper-containing compound, more commonly no more than about 0.4 ppm of the copper-containing compound, even more commonly no more than about 0.35 ppm of the copper-containing compound, yet even more commonly no more than about 0.3 ppm of the copper-containing compound, still yet even more commonly no more than about 0.25 ppm of the copper-containing compound, still yet even more commonly no more than about 0.2 ppm of the copper-containing compound, still yet even more commonly no more than about 0.15 ppm of the copper-containing compound, still yet even more commonly no more than about 0.1 ppm of the copper-containing compound, still yet even more commonly no more than about 0.05 ppm of the copper-containing compound, still yet even more commonly no more than about 0. 025 ppm of the copper-containing compound, still yet even more commonly no more than about 0.01 ppm of the copper-containing compound, or still yet even more commonly no more than about 0.005 ppm of the copper-containing compound.

Preferably, the treated wine contains no more than about 0.2 ppm of copper. More preferably, the treated wine contains about 0.2 ppm of copper. Typically, treated wines having no more than about 0.2 ppm copper are less corrosive to aluminum containers than treated wines having more than about 0.2 ppm copper. More typically, treated wines having about 0.2 ppm are less corrosive to the aluminum container than treated wines having more than 0.2 ppm copper.

The transition metal compound may be in a powder form or in the form of a solution. Preferably, the transition metal compound is provided in a powder form. More preferably, the transition metal powder is provided in the form of a flowable powder. The flowable powder may comprise the transition metal compound in the form of fine particulate. The flowable powder is in a form a fine particulate powder that can be dosed by a solids handling and/or dosing equipment.

In some embodiments, the transition metal solution is provided as an aqueous or wine solution containing the transition metal compound. The aqueous or wine solution is in a form that can be dosed by solution dosing and/or metering equipment.

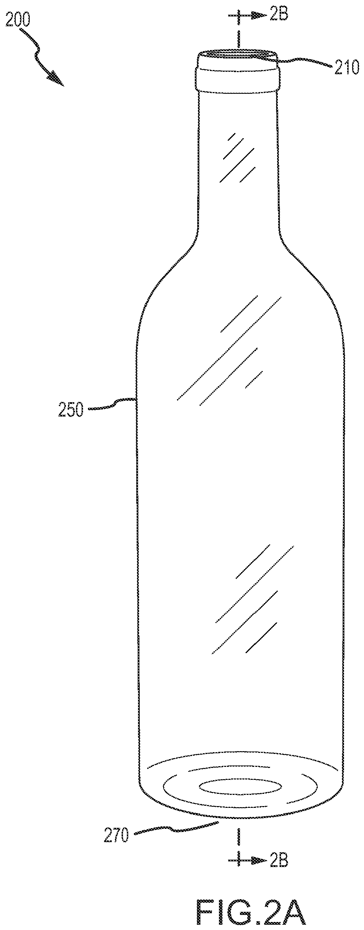

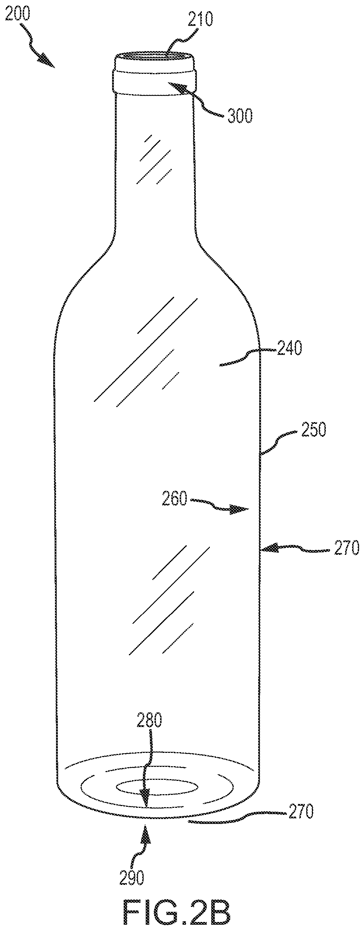

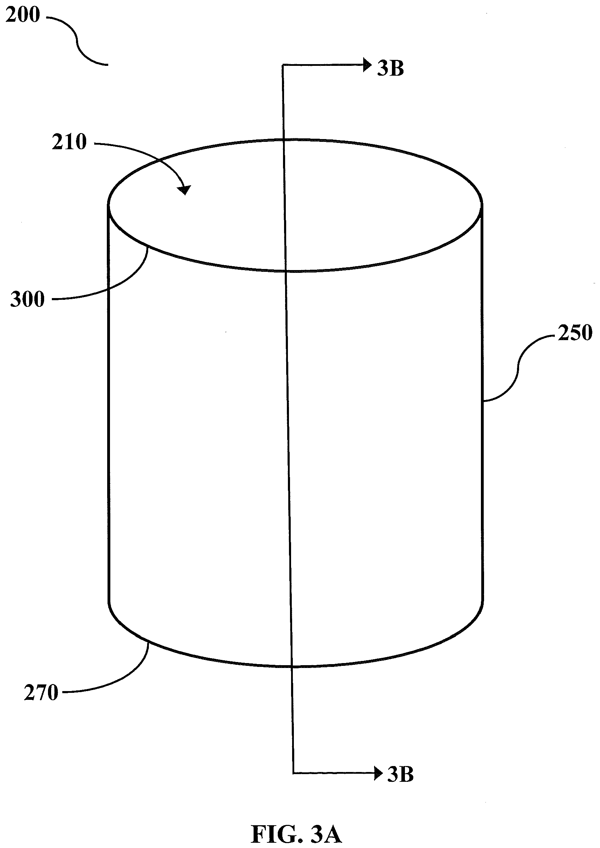

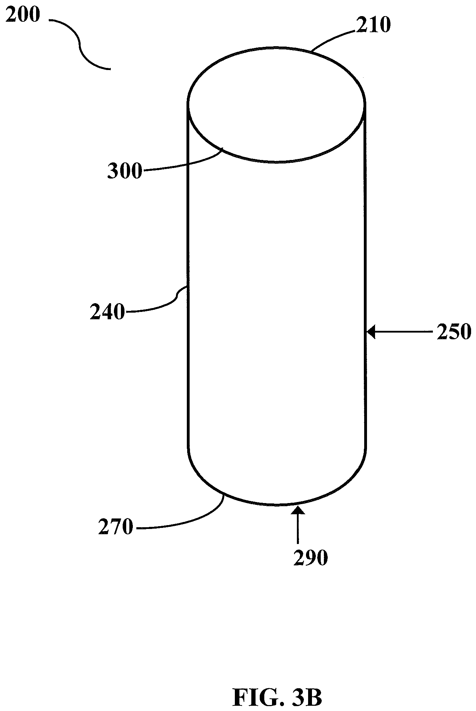

In step 130, a container 200 (see Figs. 2A, 2B, 3A and 3B) is charged with the wine. The container 200 can be any container suitable for storing the wine. The container may comprise a polymeric material, a ceramic material, a glass, a metallic material or a combination thereof. The container 200 is substantially impervious to one or both of oxygen permeation and transmission. The container 200 has a predetermined volume 240, defined by a container wall 250 interconnected to a container bottom 270.

Furthermore, the wall defines an aperture 300. The predetermined volume 240 is configured to receive the wine. Moreover, the aperture 300 is adapted to receive a metallic closure system 210. Typically, the wine is charged to the container 200 through the aperture 300. Moreover, the charging of the wine to the container 200 substantially, but not completely, fills the predetermined volume 240 with the wine.

In some embodiments, the container 200 is a metallic container. The container 200 preferably comprises an aluminum container. The container wall 250 and bottom 270 respectively have interior wall 260 and bottom 280 surfaces and exterior wall 250 and bottom 290 surfaces. The wine contained in the predetermined volume 240 is in contact with the interior wall 260 and bottom 280 surfaces.

In some embodiments, the one or both of the interior wall 260 and bottom 280 surfaces comprise aluminum. In such embodiments, the wine contained within the predetermined volume 240 is in contact with the interior 260 and bottom 280 surfaces comprising aluminum.

In some embodiments, one or both of the wall interior 260 and exterior 250 surfaces have a polymeric coating. Moreover, in some embodiments, one or both of the bottom interior 280 and exterior 290 surfaces have a polymeric coating. In such instances, the wine contained within the predetermined volume 240 is contact with the polymeric coating on one or more of the wall interior 260 and bottom interior 280 surfaces.

Returning to steps 120 and 130, in some configurations of the invention, the transition metal compound is contacted with the wine prior to filling the container 200. In other configurations of the invention, the container 200 is charged with one of the wine and transition metal compound prior to charging the container 200 with the other of the wine and transition metal compound. In yet other configurations of the invention, the wine and the transition metal compound are charged to the container 200 at about the same time by separate and/or combined wine charging and transition metal charging processes.

In step 140, the container 200 is sealed. Typically, the sealing of the container includes interconnecting and mechanically joining a metallic closure system 300 about the aperture 300. Wines sealed in containers for storage (such as, wines sealed in corked containers) are typically sealed in containers that permit some degree of oxygen permeation and transmission, allowing at least some oxygen to enter the predetermined volume 240 during storage. In some configurations, the sealed container 200 is substantially imperious to one or both of oxygen permeation and transmission.

Those of ordinary skill in the art are aware that storing wine in a sealed container that substantially impervious to oxygen permeation and transmission can lead to the formation of unwanted odors and/or flavors in the stored wine. Typically, the unwanted odor and/or flavor are due to the formation of one or more sulfur compounds. Non-limiting examples of the unwanted odor and/or flavor sulfur compounds are sulfide (S²⁻), hydrogen sulfide (HS⁻), dihydrogen sulfide (H₂S), mercaptan (R-SH), 3-mercaptohexanol (CH₃CH₂CH(SH)CH₂CH₂OH), methyl mercaptan (CH₃SH), ethyl mercaptan (CH₃CH₂SH), 2-mercatoethanol (HOCH₂CH₂SH) or a combination thereof.

Transition metal compounds, particularly copper-containing compounds, can substantially remove the malodor and/or off-flavor from wine associated with one or more of sulfide (S²⁻), hydrogen sulfide (HS⁻), dihydrogen sulfide (H₂S), mercaptan (R-SH), 3-mercaptohexanol (CH₃CH₂CH(SH)CH₂CH₂OH), methyl mercaptan (CH₃SH), ethyl mercaptan (CH₃CH₂SH), 2-mercatoethanol (HOCH₂CH₂SH) or a combination thereof. Generally, transition metals form insoluble compounds with sulfides and mercaptans.

While not wanting to be limited by theory, it is believed that the copper forms substantially insoluble sulfur-containing copper compounds with one or more of sulfide (S²⁻), hydrogen sulfide (HS⁻), dihydrogen sulfide (H₂S), mercaptan (R-SH), 3-mercaptohexanol (CH₃CH₂CH(SH)CH₂CH₂OH), methyl mercaptan (CH₃SH), ethyl mercaptan (CH₃CH₂SH), 2-mercatoethanol (HOCH₂CH₂SH) or a combination thereof. The formation of the substantially insoluble sulfur-containing copper compound (depicted as optional step 150) substantially removes the unwanted odor and/or flavor from the wine.

Generally, wines are substantially less likely to develop unwanted odor and/or flavor when stored in sealed containers having some degree of oxygen permeation and transmission. However, the method of process 100 could benefit wines that are susceptible to the development of unwanted odor and/or flavor development when stored in containers having insufficient oxygen permeation and transmission. Moreover, the method of process 100 could benefit wines stored in containers substantially lacking oxygen permeation and transmission, such as wines stored in metallic containers.

Preferably, the closure system 300 comprises a metallic lid and/or metallic closure system, more preferably an aluminum closure system. In some configurations, the metallic lid and/or metallic closure system is substantially impervious to one or both of oxygen permeation and transmission. The metallic lid and/or closure system may or may not comprise a polymeric coating.

Preferably, the metallic lid and/or closure system lacks a polymer coating positioned between the predetermined volume 240 and closure system 300. More preferably, the metallic lid and/or closure system comprises a copper alloy, even more preferably one of 1000 or 3000 aluminum alloy.

In some configurations, the closure system comprises a breathable metallic lid and/or closure system. The breathable metallic lid and/or closure system allows for at least some oxygen transmission. Preferably, the breathable metallic lid and/or closure system has oxygen transmission properties similar to cork closure system. The breathable metallic lid and/or closure system transmits sufficient oxygen to the bottled wine to substantially mitigate the aerobic conditions. Preferably, the breathable metallic lid and/or closure system transmits sufficient oxygen to the bottled wine to substantially mitigate the formation of sulfur and/or sulfur-containing compounds. In such instances, the wine is treated with little, if any, transition metal.

In some embodiments, the end closure of the metallic container is configured to accept a cork sealing system. The metallic container having a cork sealing system can have sufficient oxygen transmission to substantially mitigate of the bottled wine. In such instances, the wine is treated with little, if any, transition metal.

A number of variations and modifications of the invention can be used. It would be possible to provide for some features of the invention without providing others.

## Claims

1. A method for reducing unwanted odor and/or unwanted flavor in a wine bottled in a metallic container system, comprising:
contacting the wine with a transition metal-containing compound to form a treated wine containing the transition metal-containing compound, wherein the contacting of the wine with the transition metal-containing compound is a water soluble transition metal containing compound, wherein the wine and transition metal-containing compound are contacted after at least one of a fermentation process and a maturation process, and wherein the treated wine comprises no more than 0.2 ppm copper;
bottling the treated wine in the metallic container; and
sealing the treated wine in the metallic container having a metallic closure system, wherein the metallic container and the metallic closure system are substantially impervious to one or both of oxygen permeation and transmission, and wherein one of the following is true:
(a) the transition metal-containing compound is contacted with the wine prior to filling the container;
(b) the container is charged with one of the wine and transition metal-containing compound prior to charging the metallic container with the other of wine and transition metal-containing compound; and
(c) the wine and the transition metal-containing compound are charged to the metallic container at about the same time by a separate or a combined wine charging and transition metal-containing compound charging processes.

2. The method of claim 1, wherein the transition metal-containing compound comprises a transition metal selected from the group of metals consisting of scandium, titanium, manganese, iron, cobalt, nickel, copper, zinc, yttrium, zirconium, niobium, molybdenum, ruthenium, rhodium, palladium, silver, hafnium, tantalum, tungsten, rhenium, iridium, platinum and gold;
wherein the transition metal contained in the treated wine beverage forms an insoluble compound with one or both sulfur or a sulfur-containing compound; and
wherein the sulfur and/or sulfur-containing compound comprise one or more of a sulfide (S2-), hydrogen sulfide (HS-), dihydrogen sulfide (H2S), mercaptan (R-SH), 3-mercaptohexanol (CH3CH2CH(SH)CH2CH2OH), methyl mercaptan (CH3SH), ethyl mercaptan (CH3CH2SH), 2-mercaptoethanol (HOCH2CH2SH) or combination thereof.

3. The method of claim 2, wherein the transition metal-containing compound comprises copper; and
wherein the insoluble compound comprises copper (II) and one or more of a sulfide (S2-), hydrogen sulfide (HS-), dihydrogen sulfide (H2S), mercaptan (R-SH), 3-mercaptohexanol (CH3CH2CH(SH)CH2CH2OH), methyl mercaptan (CH3SH), ethyl mercaptan (CH3CH2SH), 2-mercaptoethanol (HOCH2CH2SH) or combination thereof.

4. The method of claim 1, wherein the metallic container comprises an aluminum container having a predetermined volume for receiving the wine, the predetermined volume being defined by a container bottom portion, a container side wall having a lower end and an upper end defining a neck and an aperture for filling;
wherein the neck of the metallic container is adapted to receive an end closure and wherein the metallic container is comprised of an aluminum alloy.

5. The method of claim 3, wherein the copper is in the form of copper sulfate.

6. The method of claim 1, wherein the transition metal containing compound comprises copper.

7. The method of claim 1, wherein the metallic closure system comprises at least one of a screw cap, a pull tab, and a full panel opening cap.

8. The method of claim 1, wherein the transition metal reacts with the wine in the container to inhibit the formation of unwanted odors and/or flavors.

9. The method of claim 1, wherein the metallic container comprises aluminum.

## Patentansprüche

1. Verfahren zur Reduzierung ungewollten Geruchs und/oder Geschmacks in einem Wein, der in einem metallischen Behältersystem abgefüllt ist, umfassend:
In-Berührung-Bringen des Weines mit einer ein Übergangsmetall enthaltenden Verbindung, um einen behandelten Wein zu bilden, der die Übergangsmetall-enthaltende Verbindung beinhaltet, wobei das In-Berührung-Bringen des Weines mit der Übergangsmetall-enthaltenden Verbindung erfolgt, die eine wasserlösliche, ein Übergangsmetall-enthaltende Verbindung ist, wobei der Wein und die ein Übergangsmetall-enthaltende Verbindung nach mindestens einem Fermentierungsprozess und einem Reifungsprozess in Berührung gebracht werden und wobei der behandelte Wein nicht mehr als 0,2ppm Kupfer enthält;
Abfüllen des behandelten Weines in den metallischen Behälter; und
Versiegeln des behandelten Weines in dem metallischen Container mit einem metallischen Verschluss-System, wobei der metallische Container und das metallische Verschlusssystem im Wesentlichen undurchlässig für Sauerstoff Permeation und/oder Transmission sind und wobei eine der folgenden Aussagen zutrifft:
(a) die Übergangsmetall-enthaltende Verbindung kommt mit dem Wein in Berührung bevor der Container befüllt wird;
(b) der Container wird mit dem Wein oder der Übergangsmetall-enthaltenden Verbindung befüllt, bevor der metallische Container mit der Übergangsmetall-enthaltenden Verbindung bzw. dem Wein befüllt wird; und
(c) der Wein und die Übergangsmetall-enthaltende Verbindung werden zur ungefähr gleichen Zeit in den metallischen Behälter gefüllt mit einem separaten oder kombinierten Wein-Befüllungsprozess und Befüllungsprozess für die Übergangsmetall-enthaltende Verbindung.

2. Verfahren nach Anspruch 1, wobei die Übergangsmetall-enthaltende Komponente ein Übergangsmetall umfasst, das aus einer Gruppe von Metallen auszuwählen ist, die aus Scandium, Titan, Mangan, Eisen, Kobalt, Nickel, Kupfer, Zink, Yttrium, Zirkonium, Niob, Molybdän, Ruthenium, Rhodium, Palladium, Silber, Hafnium, Tantal, Wolfram, Rhenium, Iridium, Platin und Gold besteht;
wobei das Übergangsmetall, das im behandelten Wein enthalten ist, eine unlösliche Verbindung mit Schwefel und/oder einer schwefelhaltigen Verbindung bildet; und
wobei der Schwefel und/oder die schwefelhaltige Verbindung einen oder mehrere der folgenden Stoffe umfasst: Sulfid (S2-), Schwefelwasserstoff (HS-), Dihydrogensulfid (H2S), Mercaptan (R-SH), 3-Mercaptohexanol (CH3CH2CH(SH)CH2CH2OH), Methylmercaptan (CH3SH), Ethylmercaptan (CH3CH2SH), 2-Mercaptoethanol (HOCH2CH2SH) oder eine Kombination davon.

3. Verfahren nach Anspruch 2, wobei die Übergangsmetall-enthaltende Verbindung Kupfer enthält; und
wobei die unlösliche Verbindung Kupfer (II) umfasst und einen oder mehrere der folgenden Stoffe: Sulfid (S2-), Schwefelwasserstoff (HS-), Dihydrogensulfid (H2S), Mercaptan (R-SH), 3-Mercaptohexanol (CH3CH2CH(SH)CH2CH2OH), Methylmercaptan (CH3SH), Ethylmercaptan (CH3CH2SH), 2-Mercaptoethanol (HOCH2CH2SH) oder eine Kombination davon.

4. Verfahren nach Anspruch 1, wobei der metallische Behälter einen Aluminium-Behälter umfasst, der ein vorbestimmtes Volumen für das Aufnehmen des Weines besitzt, wobei das vorbestimmte Volumen definiert wird von einem Behälterboden, einer Behälterseitenwand mit einem unteren Ende und einem oberen Ende, das einen Hals und eine Öffnung zum Füllen bildet;
wobei der Hals des metallischen Behälters darauf angepasst ist, einen Endverschluss zu erhalten und wobei der metallische Behälter aus einer Aluminiumlegierung besteht.

5. Verfahren nach Anspruch 3, wobei das Kupfer in Form eines Kupfersulfates vorliegt.

6. Verfahren nach Anspruch 1, wobei die Übergangsmetall-enthaltende Verbindung Kupfer enthält.

7. Verfahren nach Anspruch 1, wobei das metallische Verschluss-System mindestens eines der folgenden umfasst: Schraubverschluss, Aufreiß-Lasche (pull tap) oder einen Vollaufreißdeckel.

8. Verfahren nach Anspruch 1, wobei das Übergangsmetall mit dem Wein in dem Behälter reagiert, um die Bildung von ungewollten Geruch und/oder Geschmack zu verhindern.

9. Verfahren nach Anspruch 1, wobei der metallische Behälter Aluminium enthält.

## Revendications

1. Procédé de réduction d'une odeur indésirable et/ou d'une saveur indésirable dans du vin embouteillé dans un système de récipient métallique, dans lequel :
on met le vin en contact avec un composé contenant un métal de transition pour former du vin traité contenant le composé contenant un métal de transition, la mise en contact du vin avec le composé contenant un métal de transition étant un composé soluble dans l'eau contenant un métal de transition, dans lequel on met le vin et le composé contenant un métal de transition en contact après au moins l'une d'une opération de fermentation et d'une opération de maturation et dans lequel le vin traité ne comprend pas plus que 0, 2 ppm de cuivre ;
on embouteille le vin traité dans le récipient métallique ;
on scelle le vin traité dans le récipient métallique ayant un système de fermeture métallique, dans lequel le récipient métallique et le système de fermeture métallique sont sensiblement imperméables à l'un ou aux deux d'une perméation et d'une transmission de l'oxygène et dans lequel l'un de ce qui suit est vrai :
a) on met le composé contenant le métal de transition en contact avec le vin avant de remplir le récipient ;
b) on met dans le récipient l'un du vin et du composé contenant un métal de transition avant de mettre dans le récipient métallique l'autre du vin et du composé contenant un métal de transition ;
c) on met le vin et le composé contenant un métal de transition dans le récipient métallique à peu près en même temps par des procédés distincts ou combinés de mise du vin et de mise du composé contenant un métal de transition dans le récipient.

2. Procédé suivant la revendication A, dans lequel le composé contenant un métal de transition comprend un métal de transition choisi dans le groupe des métaux consistant en le scandium, le titane, le manganèse, le fer, le cobalt, le nickel, le cuivre, le zinc, l'yttrium, le zirconium, le niobium, le molybdène, le ruthénium, le rhodium, le palladium, l'argent, le hafnium, le tantale, le tungstène, le rhénium, l'iridium, le platine et l'or ;
dans lequel le métal de transition contenu dans la boisson de vin traité forme un composé insoluble avec un ou les deux du soufre ou d'un composé sulfuré ; et
dans lequel le soufre et/ou le composé sulfuré comprend un ou plusieurs d'un sulfure (S2-), d'un sulfure d'hydrogène (HS-), d'un sulfure de dihydrogène (H2S), d'un mercaptan (R-SH), du 3-mercaptohexanol (CH3CH2CH(SH)CH2CH2OH), du méthyl mercaptan (CH3SH), de l'éthyl mercaptan (CH3CH2SH), du 2-mercaptoéthanol (HOCH2CH2SH) ou de leurs combinaisons.

3. Procédé suivant la revendication 2, dans lequel le composé contenant un métal de transition comprend du cuivre ; et
dans lequel le composé insoluble comprend du cuivre (ll) et l'un ou plusieurs d'un sulfure (S2-), d'un sulfure d'hydrogène (HS-), d'un sulfure de dihydrogène (H2S), d'un mercaptan (R-SH), du 3-mercaptohexanol (CH3CH2CH(SH)CH2CH2OH), du méthyl mercaptan (CH3SH), de l'éthyl mercaptan (CH3CH2SH), du 2-mercaptoéthanol (HOCH2CH2SH) ou de leurs combinaisons.

4. Procédé suivant la revendication 1, dans lequel le récipient métallique comprend un récipient d'aluminium d'un volume déterminé à l'avance pour recevoir le vin, le volume déterminé à l'avance étant défini par une partie de fond du récipient, par une partie latérale du récipient, ayant une extrémité inférieure et une extrémité supérieure définissant un col et une ouverture de remplissage ;
dans lequel on adapte le col du récipient métallique pour recevoir une fermeture d'extrémité et dans lequel le récipient métallique est constitué d'un alliage d'aluminium.

5. Procédé suivant la revendication 3, dans lequel le cuivre est sous la forme de sulfate de cuivre.

6. Procédé suivant la revendication 1, dans lequel le composé contenant du métal de transition comprend du cuivre.

7. Procédé suivant la revendication 1, dans lequel le système de fermeture métallique comprend au moins l'un d'un capuchon à vis, d'une languette de liaison et d'une coiffe à ouverture complète.

8. Procédé suivant la revendication 1, dans lequel le métal de transition réagit sur le vin du récipient pour inhiber la formation d'odeurs et/ou de saveurs indésirables.

9. Procédé suivant la revendication 1, dans lequel le récipient métallique comprend de l'aluminium.
